# EUROPÄISCHE PATENTSCHRIFT

(11) **EP 1 219 928 B1**
(45) Veröffentlichungstag und Bekanntmachung des Hinweises auf die Patenterteilung: **25.10.2006**
(21) Anmeldenummer: 01125121.2
(22) Anmeldetag: 23.10.2001
(51) Int. Cl.: G01C 21/26, G01C 15/00, G01C 21/32, G06T 17/50, G09B 29/10

(54) **Verfahren und Vorrichtung zum Erzeugen von Strassenabschnitten für eine digitale Landkarte**
Method and device for generating road segments for a digital map
Procédé et dispositif pour générer des segments de route pour une carte géographique digitale

(30) Priorität: 28.12.2000 DE 10065593
(43) Veröffentlichungstag der Anmeldung: 03.07.2002
(73) Patentinhaber: ROBERT BOSCH GMBH, 70442 Stuttgart (DE)
(72) Erfinder: Janssen, Holger, 31840 Hessisch Oldendorf (DE)

(56) Entgegenhaltungen:
- EP-A- 0 921 509
- US-A- 5 633 946
- FRANK YEE: "GPS & VIDEO DATA COLLECTION IN LOS ANGELES COUNTY - A STATUS REPORT" POSITION LOCATION AND NAVIGATION SYMPOSIUM (PLANS). LAS VEGAS, APR. 11 - 15, 1994, NEW YORK, IEEE, US, 11. April 1994 (1994-04-11), Seiten 388-393, XP000489369 ISBN: 0-7803-1436-0
- BOSSLER J D: "USING THE GPSVAN:TM OPERATIONAL EFFICIENCIES THROUGH GIS AND GPS" ANNUAL REVIEW OF COMMUNICATIONS, NATIONAL ENGINEERING CONSORTIUM, CHICAGO, IL, US, Bd. 48, 1994, Seiten 833-836, XP000543231 ISSN: 0886-229X
- SCHWARZ K P ET AL: "VIASAT - A mobile highway survey system of high accuracy" VEHICLE NAVIGATION AND INFORMATION SYSTEMS CONFERENCE, 1993., PROCEEDINGS OF THE IEEE-IEE OTTAWA, ONT., CANADA 12-15 OCT. 1993, NEW YORK, NY, USA,IEEE, 12. Oktober 1993 (1993-10-12), Seiten 476-481, XP010219768 ISBN: 0-7803-1235-X

## Beschreibung

Die vorliegende Erfindung betrifft ein Verfahren und eine Vorrichtung zum Erzeugen von Straßenabschnittdaten für eine digitale Landkarte.

### Stand der Technik

Digitale Landkarten finden beispielsweise im Zusammenhang mit Fahrzeugnavigationssystemen Verwendung. Derzeit werden derartige digitale Landkarten mit Hilfe von existierenden gedruckten Landkarten zusammengestellt. Zu diesem Zweck werden insbesondere die Verläufe von Straßen erfasst und digital kodiert. Ein bekanntes Verfahren zum Digitalisieren des gedruckten Kartenmaterials sieht die manuelle Erfassung der Straßenverläufe durch den Einsatz von Graphiktabletts vor, weshalb es erforderlich ist, dass die zu erfassenden Straßen bereits kartographiert sind. Dieses Verfahren ist sehr aufwendig, führt jedoch zu qualitativ hochwertigen digitalen Landkarten. Ein weiteres bekanntes Verfahren zum Digitalisieren des Kartenmaterials sieht vor, dass das Kartenmaterial gelscannt und mit Methoden der Bildverarbeitung vektorisiert wird. Aus den durch die Vektorisierung gewonnenen Vektoren können die Straßenzüge extrahiert werden. Dieses Verfahren erfordert zwar einen geringeren manuellen Einsatz, kann jedoch wegen der unüberwachten automatischen Bildverarbeitung zu Problemen hinsichtlich der Qualität der digitalen Landkarten führen. Um die Aktualität der digitalen Landkarten zu gewährleisten, ist es unabhängig vom für die Digitalisierung des Kartenmaterials eingesetzten Verfahren erforderlich, dass die digitalisierten Straßenverläufe ständig kontrolliert und auf ihre Gültigkeit überwacht werden. Beispielsweise durch den Neubau von Straßen und durch Baustellen, die den Fahrbahnverlauf zeitweise oder auf Dauer verändern, wird der Aufwand für die Pflege des digitalen Kartenmaterials erhöht.

Aus der europäischen Patentanmeldung EP 0 921 509 A2 ist eine Vorrichtung und ein Verfahren zum Aktualisieren einer Geografischen Datenbank bekannt. Die Veröffentlichung Frank Yee: "GPS & Video Data Collection in Los Angeles County - A Status Report", Las Vegas, Apr. 11 - 15, 1994, New York, IEEE, US, 11. April 1994, Seiten 388-393 offenbart ein Verfahren bei dem GPS mit Videotechnologie verbunden ist. Aus der US 5,633,946 ist bekannt, visuelle und räumliche Informationen zu sammeln und zur Bildung von geographischen Informationsdatenbank zu verarbeiten. Die Veröffentlichung Bossler J D: "U-Singen The GPSVan: operational Efficiences through GIS and GPS", National Engineering Consortium Chicago, IL, US, Bd. 48, 1994, Seiten 833-836 offenbart die Verwendung von GPS Satelliten zum Aufzeichnen der Position von Fahrzeugen. Ferner ist aus Schwarz KP et al: "VIASAT - A mobile highway survey system of high accuracy" Vehicle Navigation And Information Systems Conference, 1993, Proceedings Of The IEEE-IEE Ottawa, ONT, Canada 12-15 Oct. 1993, New York, NY, USA, IEEE, 12. Oktober 1993, Seiten 476-481 offenbart eine Vorrichtung, die Satellitentechnologie mit CCD-Kamera-Technologie verbindet.

### Vorteile der Erfindung

Dadurch, dass das erfindungsgemäße Verfahren die folgenden Schritte umfasst:
a) Abfahren eines Straßenabschnitts mit einem Fahrzeug, das mit einer Bilderzeugungsvorrichtung ausgestattet ist, die Bilddaten des Fahrzeugumfelds liefert, und Erfassen von Fahrzeugpositionsdaten mit Positionsbestimmungsmitteln,
b) Auswerten der Bilddaten mit Bildverarbeitungsmitteln, um eine Straßenabschnittbeschreibung zusammenzustellen, und
c) Korrelieren der Fahrzeugpositionsdaten und der Straßenabschnittbeschreibung mit Korrelationsmitteln, um Straßenabschnittdaten für die digitale Landkarte zu erzeugen,
können digitale Landkarten im Vergleich zum Stand der Technik sehr viel einfacher und mit einer hohen Qualität erzeugt werden. Darüber hinaus können die Straßenabschnittdaten für die digitale Landkarte durch das Abfahren der entsprechenden Straßenabschnitte jederzeit erzeugt werden, ohne dass gedrucktes Kartenmaterial, das gemäß dem Stand der Technik erforderlich ist, vorhanden sein muss. Dies kann beispielsweise beim Neubau von Straßen oder in nicht flächendeckend kartographierten Gegenden wichtig sein.

Bei dem erfindungsgemäßen Verfahren ist vorzugsweise vorgesehen, dass die Bilderzeugungsvorrichtung zumindest eine Kamera aufweist. Diese Kamera liefert dann die Bilddaten des Fahrzeugumfelds.

Je nach Ausführungsform des erfindungsgemäßen Verfahrens kann die Bilderzeugungsvorrichtung durch eine monokulare und/oder eine stereokopische Bilderzeugungsvorrichtung gebildet sein. In jedem Fall müssen die von der Bilderzeugungsvorrichtung erzeugten Bilddaten dazu geeignet sein, dass aus diesen Bilddaten durch Bildverarbeitungsmittel eine Straßenabschnittbeschreibung gewonnen werden kann, die später noch näher erläutert wird.

Vorzugsweise sieht das erfindungsgemäße Verfahren weiterhin vor, dass die Fahrzeugpositionsdaten die absolute Position des Fahrzeugs bezüglich einem ortsfesten ersten Koordinatensystem angeben.

Die Fahrzeugpositionsdaten werden dabei durch geeignete Positionsbestimmungsmittel erzeugt. Als Positionsbestimmungsmittel kommt beispielsweise ein GPS-System oder ein Differential-GPS-System in Frage. In diesem Fall kann das ortsfeste erste Koordinatensystem beispielsweise durch die Längen- und Breitengrade gebildet sein. Ebenso ist es jedoch denkbar, dass der Ursprung des ortsfesten ersten Koordinatensystems beliebig festgelegt wird, beispielsweise derart, dass er mit einem Ursprung der zu erzeugenden digitalen Landkarte zusammenfällt.

Damit genaue Informationen über den abgefahrenen Straßenabschnitt erfasst werden können, ist es vorteilhaft, wenn die Fahrzeugpositionsdaten die Ausrichtung des Fahrzeugs bezüglich dem Ursprung des ersten Koordinatensystems angeben. Enthält die Straßenabschnittbeschreibung beispielsweise Angaben über den Abstand vom Fahrbahnrand zum Ursprung eines dem Fahrzeug zugeordneten zweiten Koordinatensystems oder zur Längsachse des Fahrzeugs, so können bei bekannter Ausrichtung des Fahrzeugs genaue Informationen über beispielsweise den Verlauf des Fahrbahnrandes hinsichtlich des ersten Koordinatensystems ermittelt werden.

Bei dem erfindungsgemäßen Verfahren ist vorzugsweise vorgesehen, dass die Straßenabschnittbeschreibung eine oder mehrere der folgenden Angaben umfasst: Verlauf des Straßenabschnitts relativ zum Fahrzeug, Abstand zwischen einer Fahrzeuglängsachse und dem Fahrbahnrand, Breite des Straßenabschnitts, Breite der Fahrbahn, Krümmung des Straßenabschnitts, Anzahl der Fahrbahnen, Standstreifeninformationen, Radweginformationen, Fahrbahnqualitätsinformationen, Verkehrszeicheninformationen, Baustelleninformationen, alternative Fahrbahnführungen. Diese Aufzählung stellt selbstverständlich keine Einschränkung auf die genannten Angaben dar. Diese können vom Fachmann gegebenenfalls in geeigneter Weise ergänzt werden, je nach speziellem Anwendungsfall. Je nachdem wie viele der Angaben die Straßenabschnittbeschreibung umfasst, kann sich der Informationsgehalt der digitalen Landkarte im Vergleich zum Stand der Technik deutlich erhöhen. Da es durch das erfindungsgemäße Verfahren möglich ist, digitale Landkarten zu erzeugen, die einen Ist-Zustand der jeweiligen Straßen beziehungsweise der jeweiligen Straßenabschnitte wiedergeben, ist es, wenn die digitale Landkarte mit einer entsprechenden Genauigkeit erzeugt wird, denkbar, eine mehr oder weniger autonome Fahrzeugführung auf der Grundlage des Informationsgehaltes der digitalen Landkarte zu realisieren.

Unabhängig davon, welche Angaben die Straßenabschnittbeschreibung umfasst, wird für das erfindungsgemäße Verfahren bevorzugt, dass die Straßenabschnittdaten die Straßenabschnittbeschreibung zumindest teilweise bezüglich des ersten Koordinatensystems angeben.

In diesem Zusammenhang wird weiterhin bevorzugt, dass die Straßenabschnittdaten Angaben über den Verlauf des jeweiligen Straßenabschnitts beziehungsweise der jeweiligen Straßen bezüglich dem ersten Koordinatensystem umfassen. Es sind jedoch ebenfalls Ausführungsformen denkbar, bei denen die Straßenabschnittdaten Angaben über den Verlauf des Straßenabschnitts bezüglich eines beliebigen ortsfesten Koordinatensystems umfassen, wobei in diesem Fall gegebenenfalls geeignete Koordinatentransformationen durchzuführen sind.

Bei einer Ausführungsform des erfindungsgemäßen Verfahrens kann weiterhin vorgesehen sein, dass das Verfahren den folgenden weiteren Schritt umfasst: d) Vergleichen der erzeugten Straßenabschnittdaten mit entsprechenden Straßenabschnittdaten einer bereits existierenden digitalen Landkarte mit Vergleichsmitteln, um eventuelle Abweichungen zu erfassen. Dieser weitere Verfahrensschritt kann insbesondere im Zusammenhang mit der Überwachung der Aktualität von digitalen Landkarten eingesetzt werden.

Durch den weiteren Verfahrensschritt d) erfasste Abweichungen können dann zur Korrektur beziehungsweise zur Aktualisierung der bereits existierenden digitalen Landkarte verwendet werden.

Weiterhin kann das erfindungsgemäß Verfahren vorsehen, dass durch den weiteren Verfahrensschritt d) erfasste Abweichungen und/oder erzeugte Straßenabschnittdaten mit Hilfe von geeigneten Kommunikationsmitteln zu einer Zentrale übertragen und/oder von einer Zentrale empfangen werden. Die Kommunikationsmittel können beispielsweise Mobilfunkeinrichtungen umfassen, die nach dem GSM-, dem UMTS-Standard oder irgendeinem anderen geeigneten Standard arbeiten.

Jede zur Durchführung des erfindungsgemäßen Verfahrens geeignete Vorrichtung fällt in den Schutzbereich der vorliegenden Erfindung.

Dadurch, dass die erfindungsgemäße Vorrichtung zum Erzeugen von Straßenabschnittdaten für eine digitale Landkarte aufweist:
- Schnittstelleneinrichtungen zum Zuführen von Positionsdaten, die bezüglich einem ortsfesten ersten Koordinatensystem erfasst werden,
- Schnittstelleneinrichtungen zum Zuführen einer Straßenabschnittbeschreibung, die zumindest Angaben über den Verlauf des entsprechenden Straßenabschnitts bezüglich einem zweiten Koordinatensystem umfasst, das bezüglich dem ersten Koordinatensystem bewegbar ist, und
- Korrelationsmittel, die die Positionsdaten und die Straßenabschnittbeschreibung korrelieren, um die Straßenabschnittsdaten für die digitale Landkarte bezüglich dem ersten Koordinatensystem zu erzeugen,
ist es, ähnlich wie bei dem erfindungsgemäßen Verfahren, möglich, hochgenaue digitale Landkarten in einfacher Weise zu erzeugen. Die erfindungsgemäße Vorrichtung ist beispielsweise zur Durchführung des erfindungsgemäßen Verfahrens geeignet. Die Schnittstelleneinrichtungen können dabei beispielsweise durch Hard- und/oder Softwareschnittstellen gebildet sein.

Auch im Zusammenhang mit der erfindungsgemäßen Vorrichtung wird bevorzugt, dass die Straßenabschnittbeschreibung eine oder mehrere der folgenden Angaben umfasst:

Verlauf des Straßenabschnitts relativ zum Fahrzeug, Abstand zwischen einer Fahrzeuglängsachse und dem Fahrbahnrand, Breite des Straßenabschnitts, Breite der Fahrbahn, Krümmung des Straßenabschnitts, Anzahl der Fahrbahnen, Standstreifeninformationen, Radweginformationen, Fahrbahnqualitätsinformationen, Verkehrszeicheninformationen, Baustelleninformationen, alternative Fahrbahnführungen. Auch in diesem Fall ist die vorstehende Aufzählung nicht zwingend abschließend. Die genannten Angaben können vom Fachmann gegebenenfalls in geeigneter Weise ergänzt werden, je nach speziellem Anwendungsfall.

Insbesondere im Zusammenhang mit der Überwachung der Aktualität von digitalen Landkarten beziehungsweise mit deren Aktualisierung kann vorgesehen sein, dass die erfindungsgemäße Vorrichtung weiterhin Vergleichsmittel aufweist, um die erzeugten Straßenabschnittdaten mit entsprechenden Straßenabschnittdaten einer bereits existierenden digitalen Landkarte zu vergleichen und eventuelle Abweichungen zu erkennen.

Weiterhin kann vorgesehen sein, dass die erfindungsgemäße Vorrichtung Kommunikationsmittel aufweist, um Daten mit einer Zentrale austauschen zu können. Die Kommunikationsmittel können dabei insbesondere Mobilfunkeinrichtungen umfassen.

In diesem Zusammenhang kann insbesondere vorgesehen sein, dass mit den Kommunikationsmitteln erkannte Abweichungen zu einer Zentrale übertragen und/oder von einer Zentrale empfangen werden. In jedem Fall können die gegebenenfalls zwischengespeicherten erkannten Abweichungen dazu verwendet werde, nicht mehr aktuell Straßenabschnittdaten zu aktualisieren.

### Zeichnungen

Die Erfindung wird nachfolgend anhand der zugehörigen Zeichnungen noch näher erläutert.

### Es zeigen:

- Figur 1: ein Blockdiagramm einer ersten Ausführungsform einer Vorrichtung zum Durchführen des erfindungsgemäßen Verfahrens;
- Figur 2: ein Blockschaltbild einer zweiten Ausführungsform einer Vorrichtung zum Durchführen des erfindungsgemäßen Verfahrens;
- Figur 3: eine Darstellung zur Veranschaulichung des Prinzips des erfindungsgemäßen Verfahrens; und
- Figur 4: eine Darstellung, die die Übertragung von Straßenabschnittdaten zu einer Zentrale veranschaulicht.

### Beschreibung der Ausführungsbeispiele

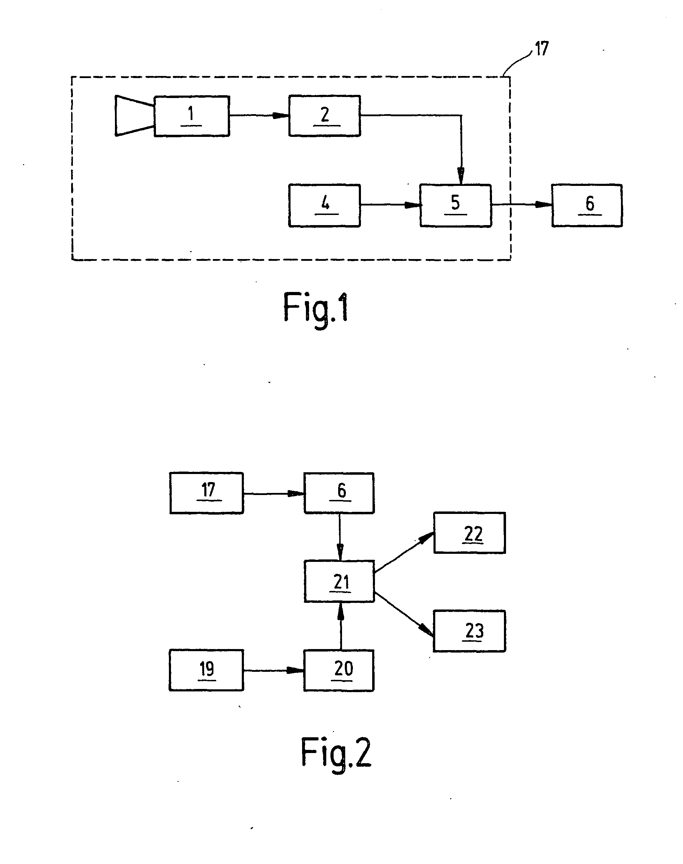

Figur 1 zeigt ein Blockdiagramm einer ersten Ausführungsform einer Vorrichtung zum Durchführen des erfindungsgemäßen Verfahrens. Gemäß der Darstellung von Figur 1 erzeugt eine Bilderzeugungsvorrichtung 1, beispielsweise eine Videokamera, Bilddaten des Fahrzeugumfelds, die Bildverarbeitungsmitteln 2 zugeführt werden. Die Bildverarbeitungsmitteln 2 werten die Bilddaten aus, um eine Straßenabschnittbeschreibung in einem geeigneten Datenformat zusammenzustellen. Die Straßenabschnittbeschreibung kann beispielsweise eine oder mehrere der folgenden Angaben umfassen: Verlauf des Straßenabschnitts 8 relativ zum Fahrzeug 7, Abstand 10 zwischen einer Fahrzeuglängsachse und dem Fahrbahnrand, Breite 12 des Straßenabschnitts 8, Breite 11 der Fahrbahn 9, Krümmung des Straßenabschnitts 8, Anzahl der Fahrbahnen 9, Standstreifeninformationen, Radweginformationen, Fahrbahnqualitätsinformation, Verkehrszeicheninformationen, Baustelleninformationen oder alternative Fahrbahnführungen. Die Bildverarbeitungsmittel 2 führen die Straßenabschnittbeschreibung in einem geeigneten Datenformat Korrelationsmitteln 5 zu. Geeignete Positionsbestimmungsmittel 4, beispielsweise nach Art des GPS-Systems, erfassen die aktuelle Position des Fahrzeugs 7 und erzeugen Fahrzeugpositionsdaten in einem geeigneten Format. Die Fahrzeugpositionsdaten geben die absolute Position des Fahrzeugs 7 bezüglich einem ortsfesten ersten Koordinatensystems 24 an. Weiterhin geben die Fahrzeugpositionsdaten die Ausrichtung des Fahrzeugs 7 bezüglich dem Ursprung des ersten Koordinatensystems 24 an. Die Positionsbestimmungsmittel 4 führen die Fahrzeugpositionsdaten in einem geeigneten Format den Korrelationsmitteln 5 zu. Die Korrelationsmittel 5 korrelieren die Fahrzeugpositionsdaten und die Straßenabschnittbeschreibung, um Straßenabschnittdaten für eine digitale Landkarte 6 zu erzeugen. Die Komponenten Bilderzeugungsvorrichtung 1, Bildverarbeitungsmittel 2, Positionsbestimmungsmittel 4 und Korrelationsmittel 5 werden gemeinsam auch als Straßenortungssystem 17 bezeichnet.

Figur 2 zeigt ein Blockdiagramm einer zweiten Ausführungsform einer Vorrichtung zum Durchführen des erfindungsgemäßen Verfahrens. In Figur 2 sind die anhand von Figur 1 erläuterten Komponenten Bilderzeugungsvorrichtung 1, Bildverarbeitungsmittel 2, Positionsbestimmungsmittel 4 und Korrelationsmittel 5 als Straßenortungssystem 17 zusammengefasst. Das Straßenortungssystem 17 erzeugt Straßenabschnittdaten für eine digitale Landkarte 6. Einem Speichermedium 19 wird eine bereits existierende digitale Landkarte entnommen. Vergleichsmittel 21 vergleichen die Straßenabschnittdaten der digitalen Landkarte 6 beziehungsweise die erzeugten Straßenabschnittdaten mit entsprechenden Straßenabschnittdaten der bereits existierenden digitalen Landkarte 20, um eventuelle Abweichungen zu erkennen. Die Vergleichsmittel 21 führen die Vergleichsergebnisse beziehungsweise eventuelle erkannte Abweichungen einem Datenträger 22 und/oder Kommunikationsmittel 23 zu. Die Kommunikationsmittel 23, die beispielsweise durch eine Mobilfunkeinrichtung gebildet sein können, sind dazu vorgesehen, die entsprechenden Daten zu einer in Figur 2 nicht dargestellten Zentrale zu übertragen. Mit der in Figur 2 dargestellten Vorrichtung kann das erfindungsgemäße Verfahren zusätzlich derart durchgeführt werden, dass bereits existierende digitale Landkarten 20 hinsichtlich der Aktualität überprüft und gegebenenfalls aktualisiert werden können.

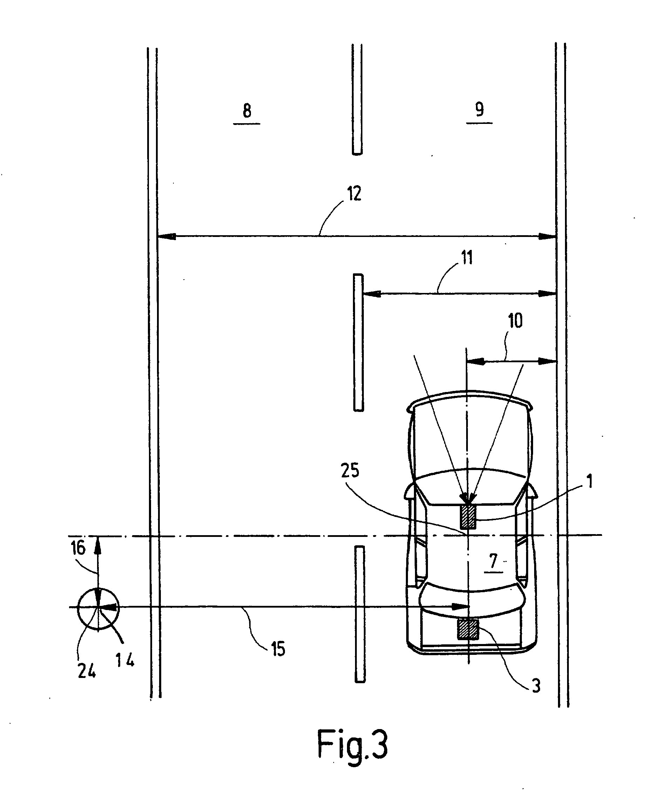

Figur 3 zeigt eine Darstellung zur Veranschaulichung des Prinzips des erfindungsgemäßen Verfahrens. Figur 3 zeigt eine Straße beziehungsweise einen Straßenabschnitt 8. Ein Fahrzeug 7 befindet sich auf einer Fahrbahn 9. Die Breite 12 des Straßenabschnitts 8 ist in Figur 3 durch einen entsprechenden Pfeil gekennzeichnet. Gleiches gilt für die Breite 11 der Fahrbahn 9. Der Abstand 10 von der Längsachse des Fahrzeugs 7 zum Rand der Fahrbahn 9 ist durch einen entsprechenden Pfeil veranschaulicht. Die Längsachse des Fahrzeugs 7 bildet gemeinsam mit einer entsprechenden Querachse ein zweites Koordinatensystem 25, das dem Fahrzeug 7 zugeordnet ist. Ein ortsfestes erstes Koordinatensystem ist mit 24 bezeichnet und weist einen Ursprung 14 auf. Das Fahrzeug 7 ist mit einer Bilderzeugungsvorrichtung 1 in Form einer Kamera ausgestattet. Die Kamera 1 liefert Bilddaten des Fahrzeugumfelds. Diese Bilddaten werden von in Figur 3 nicht dargestellten Bildverarbeitungsmitteln 2 ausgewertet, um eine Straßenabschnittbeschreibung in einem geeigneten Datenformat zusammenzustellen. Diese Straßenabschnittbeschreibung kann beispielsweise die Angaben der Breite 12 des Straßenabschnitts 8, der Breite 11 der Fahrbahn 9 und so weiter umfassen. Insbesondere umfasst die Straßenabschnittbeschreibung jedoch den Abstand 10 vom Ursprung des zweiten Koordinatensystems zum Rand der Fahrbahn 9. Das Fahrzeug 7 ist weiterhin mit Positionsbestimmungsmitteln 3 ausgestattet, die Fahrzeugpositionsdaten liefern, die die absolute Position des Fahrzeugs 7 bezüglich dem ortsfesten ersten Koordinatensystem 24 angeben. In Figur 3 nicht dargestellte Korrelationsmittel korrelieren die Fahrzeugpositionsdaten und die Straßenabschnittbeschreibung, um Straßenabschnittdaten für die digitale Landkarte 6 zu erzeugen. Die von den in Figur 3 nicht dargestellten Korrelationsmitteln erzeugten Straßenabschnittdaten enthalten im dargestellten Fall zumindest Angaben über den Verlauf des Straßenabschnitts 8 bezüglich dem ersten Koordinatensystem.

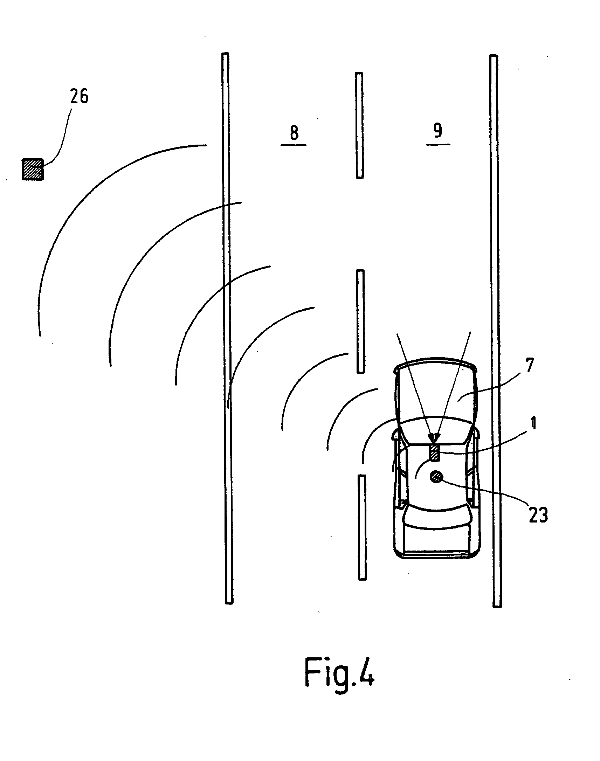

Figur 4 zeigt eine Darstellung, die die Übertragung von Straßenabschnittdaten zu einer Zentrale veranschaulicht. Gemäß der Darstellung von Figur 4 ist das Fahrzeug 7 weiterhin mit Kommunikationsmitteln 23 ausgestattet, die Daten zu einer Zentrale 26 übertragen können. Die zu der Zentrale 26 übertragenen Daten können beispielsweise die Straßenabschnittdaten, Bestandteile davon oder zumindest teilweise daraus gewonnene Informationen sein. Ebenso ist es möglich, mit Hilfe der Kommunikationsmittel 23 Angaben über eventuelle Abweichungen zwischen erzeugten Straßenabschnittdaten und entsprechenden Straßenabschnittdaten einer bereits existierenden digitalen Landkarte 19 zu übertragen.

Mit Hilfe des erfindungsgemäßen Verfahrens sowie mit der erfindungsgemäßen Vorrichtung können digitale Landkarten in einfacher Weise erzeugt werden. Darüber hinaus können bereits existierende digitale Landkarten auf ihre Aktualität überprüft und gegebenenfalls aktualisiert werden. In diesem Zusammenhang ist es beispielsweise möglich, längerfristige Baustellen oder Änderungen der Straßenführung beziehungsweise der Straßenbreite und so weiter zu erfassen. Sofern bereits existierende digitale Landkarten in einer Zentrale verwaltet werden, ist es möglich, dass diese digitalen Landkarten ständig mit Hilfe einer Flotte von Fahrzeugen aktualisiert werden, die entsprechende Straßenabschnittdaten zu der Zentrale übertragen.

In diesem Zusammenhang kommt auch die Rückübertragung von Daten von der Zentrale zu einem oder mehreren Fahrzeugen in Betracht. Die übertragen Daten, beispielsweise Straßenabschnittdaten, können dann insbesondere dazu verwendet werden, bestehende Datenbestände abzugleichen beziehungsweise zu aktualisieren.

Die vorhergehende Beschreibung der Ausführungsbeispiele gemäß der vorliegenden Erfindung dient nur zu illustrativen Zwecken und nicht zum Zwecke der Beschränkung der Erfindung. Im Rahmen der Erfindung sind verschiedene Änderungen und Modifikationen möglich, ohne den Umfang der Erfindung wie von den folgenden Ansprüchen definiert, zu verlassen.

## Patentansprüche

1. Verfahren zum Erzeugen von Straßenabschnittsdaten für eine digitale Landkarte, das die folgende Schritte umfasst:
a) Abfahren eines Straßenabschnitts (8) mit einem Fahrzeug (7), das mit einer Bilderzeugungsvorrichtung (1) ausgestattet ist, die Bilddaten des Fahrzeugumfelds liefert, und Erfassen von Fahrzeugpositionsdaten mit Positionsbestimmungsmitteln (4),
b) Auswerten der Bilddaten mit Bildverarbeitungsmitteln (2), um eine Straßenabschnittbeschreibung umfassend Fahrbahnqualitätsinformationen und/oder Baustelleninformationen zusammenzustellen, und
c) Korrelieren der Fahrzeugpositionsdaten und der Straßenabschnittbeschreibung mit Korrelationsmitteln (5), um Straßenabschnittdaten für die digitale Landkarte (6) zu erzeugen.

2. Verfahren nach Anspruch 1, **dadurch gekennzeichnet, dass** die Bilderzeugungsvorrichtung (1) zumindest eine Kamera aufweist.

3. Verfahren nach einem der vorhergehenden Ansprüche, **dadurch gekennzeichnet, dass** die Bilderzeugungsvorrichtung (1) eine monokulare Bilderzeugsvorrichtung und/oder eine stereoskopische Bilderzeugungsvorrichtung ist.

4. Verfahren nach einem der vorhergehenden Ansprüche, **dadurch gekennzeichnet, dass** die Fahrzeugpositionsdaten die absolute Position des Fahrzeugs (7) bezüglich einem ortsfesten ersten Koordinatensystem (24) angeben.

5. Verfahren nach Anspruch 4, **dadurch gekennzeichnet, dass** die Fahrzeugpositionsdaten die Ausrichtung des Fahrzeugs (7) bezüglich des Ursprungs des ersten Koordinatensystems (24) angeben.

6. Verfahren nach einem der vorhergehenden Ansprüche, **dadurch gekennzeichnet, dass** die Straßenabschnittbeschreibung zusätzlich eine oder mehrere der folgenden Angaben umfasst: Verlauf des Straßenabschnitts (8) relativ zum Fahrzeug (7), Abstand (10) zwischen einer Fahrzeuglängsachse und dem Fahrbahnrand, Breite (12) des Straßenabschnitts (8), Breite (11) der Fahrbahn (9), Krümmung des Straßenabschnitts (8), Anzahl der Fahrbahnen (9), Standstreifeninformationen, Radweginformationen, Verkehrszeicheninformationen, alternative Fahrbahnführungen.

7. Verfahren nach einem der Anspruche 4 oder 5, **dadurch gekennzeichnet, dass** die Straßenabschnittdaten die Straßenabschnittbeschreibung zumindest teilweise bezüglich dem ersten Koordinatensystem (24) angeben.

8. Verfahren nach einem der Ansprüche 4, 5 oder 7, **dadurch gekennzeichnet, dass** die Straßenabschnittdaten Angaben über den Verlauf des Straßenabschnitts (8) bezüglich dem ersten Koordinatensystem (24) umfassen.

9. Verfahren nach einem der vorhergehenden Ansprüche, **dadurch gekennzeichnet, dass** es den folgenden weiteren Schritt umfasst:
d) Vergleichen der erzeugten Straßenabschnittdaten mit entsprechenden Straßenabschnittdaten einer bereits existierenden digitalen Landkarte (19) mit Vergleichsmitteln (21), um eventuelle Abweichungen zu erfassen.

10. Verfahren nach Anspruch 9, **dadurch gekennzeichnet, dass** erfasste Abweichungen zur Korrektur beziehungsweise zur Aktualisierung der bereits existierenden digitalen Landkarte (19) verwendet werden.

11. Verfahren nach Anspruch 9 oder 10, **dadurch gekennzeichnet, dass** erfasste Abweichungen und/oder Straßenabschnittdaten mit Kommunikationsmitteln (23) an eine Zentrale (26) übertragen und/oder von einer Zentrale empfangen werden. mationen, alternative Fahrbahnführungen.

12. Vorrichtung zum Erzeugen von Straßenabschnittdaten für eine digitale Landkarte (6), wobei die Vorrichtung aufweist:
- Schnittstelleneinrichtungen zum Zuführen von Positionsdaten, die bezüglich einem ortsfesten ersten Koordinatensystem (24) erfasst werden,
- Schnittstelleneinrichtungen zum Zuführen einer durch Auswertung von Bilddaten zusammengestellten Straßenabschnittbeschreibung, die zumindest Angaben über den Verlauf des entsprechenden Straßenabschnitts bezüglich einem zweiten Koordinatensystem (25) umfasst, das bezüglich dem ersten Koordinatensystem (24) bewegbar ist, wobei die Straßenabschnittbeschreibung Fahrbahnqualitätsinformationen und/oder Baustelleninformationen umfasst und
- Korrelationsmittel (5), die die Positionsdaten und die Straßenabschnittbeschreibung korrelieren, um die Straßenabschnittdaten für die digitale Landkarte (6) bezüglich dem ersten Koordinatensystem (24) zu erzeugen.

13. Vorrichtung nach Anspruch 12, **dadurch gekennzeichnet, dass** die Straßenabschnittbeschreibung zusätzlich eine oder mehrere der folgenden Angaben umfasst: Verlauf des Straßenabschnitts (8) relativ zum Fahrzeug (7), Abstand (10) zwischen einer Fahrzeuglängsachse und dem Fahrbahnrand, Breite (12) des Straßenabschnitts (8), Breite (11) der Fahrbahn (9), Krümmung des Straßenabschnitts (8), Anzahl der Fahrbahnen (9), Standstreifeninformationen, Radweginformationen, Verkehrszeicheninformationen, alternative Fahrbahnführungen.

14. Vorrichtung nach Anspruch 12 oder 13, **dadurch gekennzeichnet, dass** sie weiterhin Vergleichsmittel (21) aufweist, um die erzeugten Straßenabschnittdaten mit entsprechenden Straßenabschnittdaten einer bereits existierenden digitalen Landkarte (19) zu vergleichen und eventuell Abweichungen zu erkennen.

15. Vorrichtung nach einem der Ansprüche 12 bis 14, **dadurch gekennzeichnet, dass** sie weiterhin Kommunikationsmittel aufweist, um Daten mit einer Zentrale austauschen zu können.

16. Vorrichtung nach Anspruch 15, **dadurch gekennzeichnet, dass** mit den Kommunikationsmitteln erkannte Abweichungen zu einer Zentrale übertragen und/oder von einer Zentrale empfangen werden.

## Claims

1. Method for generating road segment data for a digital map, which comprises the following steps:
a) travelling along a road segment (8) with a vehicle (7) which is equipped with an image-generating device
(1) which supplies image data of the surroundings of the vehicle, and sensing vehicle position data with position-determining means (4),
b) evaluating the image data with image-processing means (2) in order to compose a road segment description comprising carriageway quality information and/or roadwork information, and
c) correlating the vehicle position data and the road segment description with correlation means (5) in order to generate road segment data for the digital map (6).

2. Method according to Claim 1, **characterized in that** the image-generating device (1) has at least one camera.

3. Method according to one of the preceding claims, **characterized in that** the image-generating device (1) is a monocular image-generating device and/or a stereoscopic image-generating device.

4. Method according to one of the preceding claims, **characterized in that** the vehicle position data specifies the absolute position of the vehicle (7) with respect to a fixed, first coordinate system (24).

5. Method according to Claim 4, **characterized in that** the vehicle position data specifies the orientation of the vehicle (7) with respect to the origin of the first coordinate system (24).

6. Method according to one of the preceding claims, **characterized in that** the road segment description additionally comprises one or more of the following data items: profile of the road segment (8) relative to the road (7), distance (10) between a longitudinal axis of a vehicle and the edge of the carriageway, width (12) of the road segment (8), width (11) of the carriageway (9), curvature of the road segment (8), number of carriageways (9), hard shoulder information, wheel path information, roadsign information, alternative carriageway routing schemes.

7. Method according to one of Claims 4 or 5, **characterized in that** the road segment data specifies the road segment description at least partially with respect to the first coordinate system (24).

8. Method according to one of Claims 4, 5 or 7, **characterized in that** the road segment data comprises data items about the profile of the road segment (8) with respect to the first coordinate system (24).

9. Method according to one of the preceding claims, **characterized in that** it comprises the following further step:
d) comparison of the generated road segment data with corresponding road segment data of an already existing digital map (19) using comparison means (21) in order to sense possible deviations.

10. Method according to Claim 9, **characterized in that** sensed deviations are used to correct or to update the already existing digital map (19).

11. Method according to Claim 9 or 10, **characterized in that** sensed deviations and/or road segment data is transmitted to a control centre (26) and/or received from a control centre using communications means (23).

12. Device for generating road segment data for a digital map (6), the device having:
- interface devices for supplying position data which is sensed with respect to a fixed, first coordinate system (24),
- interface devices for feeding a road segment description which is composed by evaluating image data and which comprises at least data items about the profile of the corresponding road segment with respect to a second coordinate system (25) which can be moved with respect to the first coordinate system (24), the road segment description comprising carriageway quality information and/or roadworks information, and
- correlation means (5) which correlate the position data and the road segment description in order to generate the road segment data for the digital map (6) with respect to the first coordinate system (24).

13. Device according to Claim 12, **characterized in that** the road segment description additionally comprises one or more of the following data items: profile of the road segment (8) relative to the vehicle (7), distance (10) between a longitudinal axis of a vehicle and the edge of the carriageway, width (12) of the road segment (8), width (11) of the carriageway (9), curvature of the road segment (8), number of the carriageways (9), hard shoulder information, wheel path information, road sign information, alternative carriageway routing schemes.

14. Device according to Claim 12 or 13, **characterized in that** it also has comparison means (21) for comparing the generated road segment data with corresponding road segment data of an already existing digital map (19) and detecting possible deviations.

15. Device according to one of Claims 12 to 14, **characterized in that** it also has communications means in order to be able to exchange data with a control centre.

16. Device according to Claim 15, **characterized in that** detected deviations are transmitted to a control centre and/or received from a control centre using the communications means.

## Revendications

1. Procédé pour générer des données de tronçon de route pour une carte géographique numérique, qui comporte les étapes suivantes :
a) parcours d'un tronçon de route (8) avec un véhicule (7), équipé d'un appareil de génération d'images (1) qui fournit des données d'image de l'environnement du véhicule, et détection des données de position du véhicule par des moyens de détermination de position (4),
b) exploitation des données d'images par des moyens de traitement d'images (2), pour rassembler des informations sur la qualité de la voie de circulation et/ou des informations sur les chantiers, comportant une description du tronçon de route, et
c) corrélation des données de position du véhicule et de la description du tronçon de route par des moyens de corrélation (5), pour générer des données de tronçon de route pour la carte géographique numérique (6).

2. Procédé selon la revendication 1,
**caractérisé en ce que**
l'appareil de génération d'images (1) possède au moins une caméra.

3. Procédé selon l'une des revendications précédentes,
**caractérisé en ce que**
l'appareil de génération d'images (1) est un appareil de génération d'images monoculaire et/ou un appareil de génération d'images stéréoscopique.

4. Procédé selon l'une des revendications précédentes,
**caractérisé en ce que**
les données de position du véhicule donnent la position absolue du véhicule (7) par rapport à un premier système de coordonnées (24) fixe.

5. Procédé selon la revendication 4,
**caractérisé en ce que**
les données de position du véhicule donnent l'orientation du véhicule (7) par rapport à l'origine du premier système de coordonnées (24).

6. Procédé selon l'une des revendications précédentes,
**caractérisé en ce que**
la description du tronçon de route comporte en outre une ou plusieurs des indications suivantes : tracé du tronçon de route (8) relativement au véhicule (7), distance (10) entre un axe longitudinal du véhicule et le bord de la voie de circulation, largeur (12) du tronçon de route (8), largeur (11) de la voie de circulation (9), courbure du tronçon de route (8), nombre des voies de circulation (9), informations sur les bandes d'arrêt, informations sur les pistes cyclables, informations sur les panneaux de signalisation, parcours alternatifs de circulation.

7. Procédé selon l'une des revendications 4 ou 5,
**caractérisé en ce que**
les données sur le tronçon de route donnent au moins en partie la description du tronçon de route par rapport au premier système de coordonnées (24).

8. Procédé selon l'une des revendications 4, 5 ou 7,
**caractérisé en ce que**
les données du tronçon de route comportent des indications sur le tracé du tronçon de route (8) par rapport au premier système de coordonnées (24).

9. Procédé selon l'une des revendications précédentes,
**caractérisé en ce qu'**il comporte les autres étapes suivantes :
d) comparaison des données de tronçon de route générées aux données de tronçon de route correspondantes d'une carte géographique numérique déjà existante (19) par des moyens de comparaison (21), pour détecter les divergences éventuelles.

10. Procédé selon la revendication 9,
**caractérisé en ce qu'**
on utilise les divergences détectées pour la correction ou pour l'actualisation de la carte géographique numérique déjà existante (19).

11. Procédé selon la revendication 9 ou 10,
**caractérisé en ce que**
les divergences et/ou les données du tronçon de route détectées sont transmises à une centrale (26) et/ou reçues par une centrale par des moyens de communication (23).

12. Appareil pour générer des données de tronçon de route pour une carte géographique numérique (6), dans lequel l'appareil possède :
- des dispositifs d'interface pour introduire des données de position qui sont détectées par rapport à un premier système de coordonnées (24) fixe,
- des dispositifs d'interface pour introduire une description d'un tronçon de route composée pour l'exploitation de données d'image et comportant au moins des indications sur le tracé du tronçon de route correspondant, par rapport à un deuxième système de coordonnées (25) mobile par rapport au premier système de coordonnées (24), la description du tronçon de route comportant des informations sur la qualité de la voie de circulation et/ou des informations sur les chantiers, et
- des moyens de corrélation (5) qui corrèlent les données de position et la description du tronçon de route, pour générer les données de tronçon de route pour la carte géographique numérique (6) par rapport au premier système de coordonnées (24).

13. Appareil selon la revendication 12,
**caractérisé en ce que**
la description du tronçon de route comporte en outre une ou plusieurs des indications suivantes : tracé du tronçon de route (8) relativement au véhicule (7), distance (10) entre un axe longitudinal du véhicule et le bord de la voie de circulation, largeur (12) du tronçon de route (8), largeur (11) de la voie de circulation (9), courbure du tronçon de route (8), nombre des voies de circulation (9), informations sur les bandes d'arrêt, informations sur les pistes cyclables, informations sur les panneaux de signalisation, parcours alternatifs de circulation.

14. Appareil selon la revendication 12 ou 13,
**caractérisé en ce qu'**
il possède en outre des moyens de comparaison (21), pour comparer les données de tronçon de route générées aux données de tronçon de route correspondantes d'une carte géographique numérique déjà existante (19) et identifier éventuellement les divergences.

15. Appareil selon l'une des revendications 12 à 14,
**caractérisé en ce qu'**
il possède en outre des moyens de communication pour pouvoir échanger des données avec une centrale.

16. Appareil selon la revendication 15,
**caractérisé en ce que**
les divergences identifiées par les moyens de communication sont transmises à une centrale et/ou reçues par une centrale.
